# EUROPEAN PATENT APPLICATION

(11) **EP 4 752 263 A1**
(43) Date of publication of application: **03.06.2026**
(21) Application number: 25219192.9
(22) Date of filing: 27.11.2025
(51) Int. Cl.: C25B 1/23, C25B 3/03, C25B 3/07, C25B 3/26

(54) **ELECTROLYTE AND PROCESS FOR THE ELECTROCHEMICAL REDUCTION OF CARBON DIOXIDE**

(30) Priority: 27.11.2024 PT 2024119862
(71) Applicant: UNIVERSIDADE NOVA DE LISBOA, 1099-085 Lisboa (PT)
(72) Inventor: Staack Reis Machado, Ana Maria, 2825-516 Caparica (PT); Almeida Fernandes Cobra Branco, Luís Alexandre, 2825-516 Caparica (PT); Pereira Messias, Sofia Alexandra, 2825-516 Caparica (PT); De Moura Dias Mendes, Manuel João, 2825-516 Caparica (PT); Ferrão De Paiva Martins, Rodrigo, 2825-516 CAPARICA (PT); Mireya Rangel Archila, Carmen, 1649-038 Lisboa (PT)
(74) Representative: RCF - Protecting Innovation, S.A.

(57) **Abstract**

The present invention relates to an electrolyte for the electrochemical reduction of carbon dioxide comprising a hydrophilic ionic liquid and water, wherein the hydrophilic protic ionic liquid comprises an anion that is a Brønsted base conjugate to a Brønsted acid. The invention further related to a process for the electrochemical reduction of carbon dioxide using the electrolyte of the invention.

## Description

### Field of the Invention

The present invention relates to electrolytes based on hydrophilic protic ionic liquids for the electrochemical reduction of carbon dioxide, and to the process of electrochemical reduction of carbon dioxide using said electrolytes.

### Background of the Invention

Global warming and the resulting climate change pose a threatens the survival of the planet's ecosystems. Combating climate change also involves mitigating greenhouse gas emissions, particularly carbon dioxide emissions.

In this context, a series of technologies known as carbon capture and utilization (CCU) have been developed, which use carbon dioxide from industrial emissions, or extracted from the atmosphere, and transform it into fuels and chemicals from a circular economy perspective.

One of these technologies is the electrochemical reduction of carbon dioxide. This technology has been recognized as having enormous potential for mitigating CO₂ emissions, because it can be powered by renewable energy and operates under mild conditions of pressure and temperature (temperatures close to ambient temperature up to 100°C and pressures up to 100 bar).

This electrochemical reduction process of carbon dioxide is carried out in an electrochemical cell or a stack of electrochemical cells constituting a CO₂ electrolyser. Renewable electricity is supplied to the cell/electrolyser, leading to the oxidation of water at the anode, producing molecular oxygen, protons and electrons. The electrons flow through the external circuit to the cathode, where they combine either with protons that cross the separator/membrane between the cathodic and anodic compartments of the electrochemical cell to produce hydrogen, or with CO₂ to give reduction products such as CO, formaldehyde, formic acid, methanol, methane, etc.

Some examples of electrochemical reactions (reactions 3-7) are given below that, when coupled with the electrolysis of water (1-2), yield different CO₂ reduction products, where their respective standard potentials are also indicated.

2*H⁺ +* 2*e⁻* → *H*₂ *(1)*

2*H*₂ *O* → *O*₂ + 4*H⁺* *(2)*

*CO*₂ *+* 2*H⁺ +* 2*e⁻* → *CO +H*₂*O E°* = -0.53 *V* vs*. SHE* (3)

*CO*₂ *+* 2*H⁺ +*2*e⁻* → *HCOOH E°* = -0.61 *V* vs. *SHE* (4)

*CO*₂ *+* 4*H⁺ +* 4*e⁻* → *HCHO + H*₂*O E°* = -0.51 V vs. SHE (5)

CO₂ *+* 6*H⁺ +* 6*e⁻* → *CH*₃*OH + H₂O E°* = -0.38V vs. SHE (6)

CO₂ *+ 8H⁺ + 8e⁻* → *CH*₄ *+* 2*H₂O E°* = -0.24V vs. SHE (7)

This type of technology is ideal for mass production and for automated maintenance. Catalytic electrodes determine the productivity, selectivity, and energy efficiency of the process, but the electrolyte plays an important role and also influences these parameters. The pH of the electrolyte, its buffering properties, and its ability to dissolve CO2 and stabilize reaction intermediates will influence the overall CO₂ electro-reduction process.

Room temperature ionic liquids (ILs) are defined as organic salts that are liquid at temperatures below 100°C. The ability of certain families of ionic liquids to absorb carbon dioxide has motivated pilot-scale research into the use of ionic liquids as agents for its capture. Additionally, their ability to conduct electricity and their wide electrochemical stability window make them particularly suitable as constituents of electrolytes for the electro-reduction of carbon dioxide.

The first study that used an IL-based electrolyte was reported in 2004 by Zhao et al. (Zhao et al. Supercrit. Fluids, 200, 32, 287-291). 1-Butyl-3-methylimidazolium hexafluorophosphate ([BMIM][PF6]) saturated with water (3.5 w/w% water) was used, demonstrating the production of synthesis gas (CO+H₂) at a Cu electrode.

Rosen et al., "Ionic liquid mediated selective conversion of CO2 to CO at low overpotentials", Science, 2011, 334, 643-644) first reported that the use of the ionic liquid 1-Ethyl-3-methylimidazolium tetrafluoroborate([EMIM][BF4]) increased the selectivity of CO₂ reduction to CO and decreased overpotential.

Since then, the development of ionic liquid-based electrolytes has been the subject of intense research. The higher viscosities of ILs, when compared to the viscosities of other solvents, do not allow for the achievement of the high current densities necessary for practical applications. Thus, non-aqueous and aqueous mixtures of ILs have frequently been the subject of investigation.

Most studies of IL-based electrolytes have focused on electrolytes consisting of a hydrophobic IL dissolved in an organic solvent, such as acetonitrile, for the electro-reduction of CO₂ to CO (F. Liang et al., "Intrinsic defect-rich graphene coupled cobalt phthalocyanine for robust eletrochemical reduction of carbon dioxide", ACS Appl. Mater. Interfaces, 2021, 13, 25523-25532; W. Guo et al., "Highly selective CO2 eletroreduction to CO on Cu-Co bimetallic catalysts", ACS Sustainable Chem. Eng., 2020, 8, 12561-12567).

Document WO2014/161262A1 reveals that a bismuth-based cathode could promote the electrochemical conversion of CO2 to CO at overvoltages below 0.2V, operating with a Faradaic efficiency of approximately 95% in acetonitrile-saturated CO₂ containing millimolar concentrations of a 1,3-dialkyl-substituted imidazolium-based ionic liquid, such a 1-butyl-3-methylimidazolium triflate ([BMIM] [OTf]).

A smaller number of studies have focused on electrolytes consisting of a hydrophilic IL dissolved in an organic solvent for the reduction of CO₂ to CO (T. Kunene et al., "Selective CO2 reduction over rose's metal in the presence of an imidazolium ionic liquid eletrolyte", ACS Appl. Energy Mater., 2019, 3, 4193-4200; I. Ganesh, "BMIM-BF4 RTIL: Synthesis, characterization and performance evaluation for eletrochemical CO2 reduction to CO over Sn and MoSi2 cathodes", Carbon, 2020, 6, 47) or ternary mixtures of IL, organic solvent and water (H. Wang, et al., "Efficient eletroreduction of CO2 to CO on porous ZnO nanosheets with hydroxyl groups in ionic liquid based eletrolytes", ChemCatChem, 2021, 13, 2570-2576).

The exact mechanism by which ILs promote the electro-reduction of CO₂ is not yet fully elucidated. The existing controversies probably stem from the fact that the varius studies are carried out under different conditiona, namely using only ILs as electrolytes, using ILs dissolved in anhydrous organic solvents with or without additional supporting electrolyte, in the presence or absence of water, and mixtures of ILs and water at different concentrations.

The activity of various electrode materials combined with three ionic liquids (electrolyte consisting solely of ILs), one hydrophilic [BMIM][BF₄], and two hydrophobic [BMIM][NTf₂] and [BMPyrr][NTf₂] were investigated (A. V. Rudnev, et al., "Specific cation adsorption: Exploring synergistic effects on CO2 eletroreduction in ionic liquids", ChemEletroChem, 2020, 7, 1897-1903). It was concluded that the co-catalyst effect depends simultaneously on the chemical properties of the IL (outer sphere mechanism) and the catalytic material (inner sphere mechanism), functioning only for certain combinations of ILs and electrode material.

Tanner et al. (Tanner et al., "Carbon Dioxide Reduction in Room-Temperature Ionic Liquids: The Effect of the Choice of Electrode Material, Cation, and Anion", J. Phys. Chem. C, 2016, 120, 26442-26447) studied the effect of the electrode material, of the cation and anion in the mechanism of CO2 reduction in pure ionic liquids. The effect of electrode material was evaluated on silver, gold, platinum, and glassy carbon electrodes using cyclic voltammetry on 1-butyl-3-methylimidazoliumbis(trifluoromethylsulfonyl)imide([Bmim][NTf₂] ). The cation and anion effect was investigates with the following ILs: 1-butyl-1-methylpyrrolodinium bis(trifluoromethylsulfonyl)imide ([Bmpyrr][NTf₂]), 1-ethyl-3-methylimidazolinium bis(trifluoromethylsulfonyl)imide ([Emim][NTf₂]), 1-propyl-3-methylimidazolium bis(trifluoromethylsulfonyl)imide ([Pmim]-[NTf₂]),1-butyl-3-methylimidazolinium and tris (pentafluoroethyl) trifluorophosphate ([Bmim] [FAP]), and 1-butyl-3-methylimidazolinium tetrafluoroborate ([Bmim] [BF4]). Although the variation in peak potentials observed for the various cations (0,4 V) is much lower than the previously observed by changing the electrode material (1.5V), the cation-sensitive potential peaks suggest that the reduction mechanism possibly includes a chemical step. This likely involves the binding of the first the binding of the cation to the silver electrode surface, where a desorption process allows the CO2 molecule to access the electrode surface, preceding an irreversible reduction of carbon dioxide. This supports the hypothesis that a specific inner-sphere process occurs in silver, with the desorption process of the double layer around the electrode being responsible for the differences in reduction potentials observed for the various cations (outer-sphere mechanism).

Hanc-Scherer et al. (F. A. Hanc-Scherer et al., "Surface structured platinum electrodes for the electrochemical reduction of carbon dioxide in imidazolium-based ionic liquids" Phys. Chem. Chem. Phys., 2015, 17, 23909-23916)investigated the electro-reduction of CO₂ in 1-ethyl-3-methylimidazoliumbis(trifluoromethylsulfonyl)imide([EMIM][NTf₂] )on a platinum electrode in the absence of a proton source and concluded that the electro-catalytic activity was explained by the formation of an [EMIM-CO₂]⁻ adduct involving the reduction of both EMIM⁺ and CO₂. When [H⁺][NTf²⁻] was added as a proton source, the formation of HCOOH was favored, inhibiting the reduction of [EMIM] [NTf2].

Sun et al. (L Sun et al., "Switching the Reaction Course of Electrochemical CO2 Reduction with Ionic Liquids", Langmuir, 2014, 30, 6302-6308)found that the ionic liquid [EMIM][NTf₂] promoted the reduction of CO₂ to CO instead of the formation of the oxalate anion, thus decreasing the overvoltage, when used as a supporting electrolyte in anhydrous acetonitrile on a Pb electrode, replacing the supporting electrolyte in anhydrous acetonitrile on a Pb electrode, replacing the supporting electrolyte tetraethylammonium perchlorate. These authors observed that increasing the concentration of [EMIM][NTf2] resulted in the formation of a carboxylate species with the reduced CO₂ covalently bonded to the imidazolium ring along with CO.

Lau et al. (Lau et al., "New Insights Into the Role of Imidazolium-Based Promoters for the Electro-reduction of CO2 on a Silver Electrode", J. Am. Chem. Soc., 2016, 138,7820-7823) explained the catalytic activity of imidazolium IL by stabilizing the high-energy CO₂·⁻ intermediate through the establishment of C4-H or C5-H hydrogen bonds with imidazolium cations with various functionalities and tetrafluoroborate (BF4⁻), tetrafluoromethanesulfonate (OTf⁻) and bis(trifluoromethanesulfonyl)imide (TFSI⁻) anions in 0.1 M tetrabutylammonium hexafluorophosphate solutions in anhydrous acetonitrile.

Neyrizi et al. (Neyrizi et al., "What It Takes for Imidazolium Cations to Promote Electrochemical Reduction of CO2", ACS Energy Lett., 2022, 7, 3439-3446) explains the effect of imidazolium cations on the electro-reduction of CO2 dissolved in anhydrous acetonitrile based on the correlation of the acidity of the C2-H carbon varying the functionality of the cation in the N1 and N2 positions, demonstrating that the rate-determining step of the reaction involves a concerted electron-proton coupled transfer, leaving room for optimization of the molecular structure.

Previous studies have focused more on the molecular interactions between isolated ions in the ionic liquid and CO₂. The work of Liu et al. (Liu et al., "Tuning Ionic Screening to Accelerate Electrochemical CO2 Reduction in Ionic Liquid Electrolytes", ACS Catal., 2022, 12,9706-9716)highlights the importance of the contribution of collective ion correlations and the organization to reactivity. They demonstrated that the concentration of maximum reactivity correspond to conditions in which the electrical double layers exhibit the greatest shielding effect, where local electric fields stabilize polar intermediates. The electrolyte studied was EMIMBF4 in acetonitrile using TBA BF4 as supporting electrolyte and 900-100 ppm of water.

In turn, Noh et al. (Noh et al., "Insight into the Role of Entropy in Promoting Electrochemical CO2 reduction by Imidazolium Cations, J. Am. Chem.Soc., 2023, 145, 27657-27663) demonstrated the importance of the organization of the imidazolinium cation layer on an Ag surface. These authors concluded that the rate of the CO₂ reduction reaction is controlled by the initial entropic state, which depends on the applied potential, through the organization of the cations at the electrochemical interface. The rate of CO₂ reduction was measured on Ag electrodes in a CO₂ saturated base electrolyte consisting of 0.1 M Bu4NPBF6 (Bu4N⁺) in acetonitrile anhydrous. This base electrolyte was used to avoid modification of the overall conductivity of the electrolyte when the imidazoline structures under study ([EMIM][BF₄] and 1-ethyl-2,3-dimethylimidazolinium tetrafluoroborate [EMIM][BF₄] are added, and the concentrations are altered.

Aqueous solutions of ILs have been less studied. The work of Rosen et al. (Rosen et al., "In Situ Spectroscopic Examination of a Low Overpotential Pathway for Carbon Dioxide Conversion to Carbon Monoxide", J. Phys. Chem. C, 2012, 116, 15307-15312) indicates that the formation of an EMIM layer adsorbed on an electrolyte consisting of [EMIM][BF₄] with a small amount of water (90 mM) could lower the barrier to CO₂ conversion at a platinum electrode and inhibit hydrogen formation. However, anions such a BF4⁻ and PF6⁻ are not suitable as constituents of aqueous electrolytes because they undergo hydrolysis (Rosen et al., R. I. Water enhancement of CO2 conversion on silver in 1-ethyl-3-methylimidazolium tetrafluoroborate. Journal of the Electrochemical Society 2013; 160: H138-H141).

Another example of a study using an electrolyte based on a hydrophilic ionic liquid and small amounts of water is the study of Ratschmeier et al. (Ratschmeier et al., "Cations of ionic liquid electrolytes can act as a promoter for CO2 electrocatalysis through reactive intermediates and electrostatic stabilization", J. Phys. Chem. C, 2021, 125, 16498-16507) who investigated the mechanism of CO2 electroreduction promotion on platinum electrodes of electrolytes composed of hydrophobic ionic liquids with the cations 1-butyl-3-methylimidazolinium [BMIM], 1-butyl-2,3-dimethylimidazolinium [BMMIM], and 1-butyl-1-methylpyrrolidinium [BMPyrr] and the anion bis(trifluoromethylsulfonyl)imide [NTf₂] and 50 and 500 mM of water. In the case of [BMIM][NTf2] with an active C2 position on the imidazolium ring, the intermediate species [BMIM]-2-carboxylic acid is formed, which lowers the activation barrier for CO₂ conversion. This species was detected by in sity generation of the sum of vibrational frequencies and by Fourier transform infrared reflection absorption spectroscopy. In the case of the ILs [BMIM][NTf2] and [BMPyrr] [NTf2] with the protected C2 position and 0.5 M H₂O, the stabilization of CO₂ was attributed to the formation of bicarbonate and Coulomb interactions between CO₂·⁻ and the IL cations.

Among the prior art documents that utilize ionic liquid-based electrolytes with a higher water content is EP3292231B1, which discloses a catalytic system for the electrochemical reduction of CO₂ to synthesis gas. The catalytic system comprises a catalytic cathode coupled to an ionic liquid-based electrolyte containing water and dissolved CO₂, but only hydrophilic ionic liquids are considered.

Zeng et al. (Zeng et al., "High-efficient CO2 electrocatalysis over nanoporous Au film enabled by a combined pore engineering and ionic liquid-mediated approach", Chem. Eng. J., 2021, 425, 131663) also used a hydrophilic IL and studied the influence of water content on the electro-reduction of CO2 to CO using an electrolyte consisting of mixtures of EMIMBF4 and 1 M NaHCO3 with EMIMBF4/1M NaHCO3 compositions of 30/70, 60/40 and 90/10 % v/v. They obtained a faradaic efficiency of up to 92.5% and a mass activity of 3.0 A/g for CO at - 0.55 V vs. RHE. However, as already mentioned, the IL is susceptible to hydrolysis.

A similar case is that of the study by Xu et al. (Xu et al., "Carbon dioxide electroreduction into syngas boosted by a partially delocalized charge in molybdenum sulfide selenide alloy monolayers", Angew. Chem., Int. Ed., 2017, 56, 9121-9125) who investigated ternary alloys of transition metal dichalcogenides (MoSeS) in a 96 mol% EMIMBF4 and water solution, with the ternary alloy being more efficient at producing synthesis gas than the corresponding binary alloys, leading to a current density of 43 mA cm⁻² with a faradaic efficiency for CO of 45.2% at -1.15 V vs. RHE.

Wang et al. (Wang et al., Appl. Catal., B, 2020, 264, 118495, DOI: 10.1016/j.apcatb.2019.118495) investigated the catalytic action of [EMIM] cations in the electro-reduction of CO₂ at a copper electrode using an electrolyte consisting of EMIMBF4 and 68.7 M water. They concluded that the formation of EMIM radicals by reduction of [EMIM] cations plays a key role in the activation of CO₂, forming an EMIM-CO₂ species followed by EMIM-COOH and finally the release of CO.

In light of the foregoing, it is clear that there is a need in the field for an electrolyte for the electrochemical reduction of CO₂ that is a good solvent for carbon dioxide, chemically and electrochemically stable, and that is sustainable and inexpensive, in order to allow for an economically viable process that can be used industrially.

### Summary of the Invention

The present invention relates to an electrolyte for the electrochemical reduction of carbon dioxide comprising a hydrophilic protic ionic liquid with a weight concentration in the range of 99.5% w/w to 2% w/w and water with a weight concentration in the range of 0.5% w/w to 98% w/w, wherein the hydrophilic protic ionic liquid comprises an anion that is a Brønsted base conjugate of a Brønsted acid.

In one aspect of the present invention, the Brønsted base is selected from the group comprising: imidazoles; trisubstituted amines with alkyl or aryl groups; substituted guanidines; pyridine or monosubstituted pyridine with alkyl groups; pyrazole or pyrazole substituted with alkyl groups; pyrrole or pyrrole substituted with alkyl groups; triazole; amino acids; trisubstituted phosphines with alkyl or aryl groups; and disubstituted sulfonic acids with alkyl or aryl groups.

In another aspect of the present invention, the Brønsted acid is selected from the group comprising carboxylic, sulfonic or phosphoric acids.

In another aspect, the carboxylic acid is preferably selected from the group comprising: acetic acid, propionic acid, isobutyric acid, lactic acid, gallic acid, dicarboxylic acids and tricarboxylic acids.

In yet another aspect, the sulfonic acid is preferably selected from the group comprising: ethanesulfonic acid, propanesulfonic acid, butanesulfonic acid and paratoluenesulfonic acid.

In one aspect of the invention, phosphoric acid is selected from the group comprising: monophosphoric acid, metaphosphoric acid, phosphorous acid and hypophosphoric acid.

In another aspect, the water concentration by weight is in the range of 50% w/w to 98% w/w.

The present invention also relates to a process for the electrochemical reduction of carbon dioxide comprising the following steps:
- Addition of 0.5% w/w to 98% w/w of demineralized water to the hydrophilic protic ionic liquid to obtain the electrolyte, as described in claims 1 to 7;
- Dissolution of the electrolyte obtained in the previous step with CO₂ pressure in the range of ambient pressure to 80 bar;
- Stabilization of the desired pressure and temperature for electrolysis;
- Electrolysis at a temperature in the range of ambient temperature to 80°C and at a pressure in the range of atmospheric pressure to 80 bar of CO₂, applying a current higher than 100 mA/cm² up to the order of magnitude of Ampere per cm².

In one aspect of the present invention, the addition of demineralized water is carried out in an amount ranging from 50% w/w to 98% w/w.

In another aspect, the dissolution of the electrolyte is carried out at a CO₂ pressure in the range between atmospheric pressure and 30 bar.

Furthermore, the present invention relates to the use of the electrolyte, as defined above, in the electrochemical reduction of carbon dioxide or in the direct capture and conversion of carbon dioxide.

### Detailed Description of the Invention

Considering the need that exists in the technical area of the invention, as previously mentioned, the inventors developed an electrolyte for the electrochemical reduction of carbon dioxide, with a simple formulation comprising a mixture of two to three components at most, and without organic additives, since the latter hinder the reutilization process of the electrolyte, thus reducing its sustainability and contributing to a higher cost.

Among several others, electrolytes based on acetonitrile and dimethylformamide are known in the state of the art, but these are harmful to human health (Adhikari et al., "An overview on common organic solvents and their toxicity", Int. J. Pharm., 2019, 28,1-18). In turn, electrolytes comprising mixtures of ionic liquids and an organic solvent, such as acetonitrile, are also known, but these have a negative environmental impact.

In this sense, the present inventors have developed new electrolytes based on aqueous solutions of hydrophilic protic ionic liquids that are chemically and electrochemically stable, acting as good solvents for carbon dioxide, thus enabling the electrochemical reduction of carbon dioxide. Furthermore, they are sustainable and inexpensive, making the electrochemical reduction of carbon dioxide economically viable and industrially applicable. The electrolytes of the invention for the direct electrochemical reduction of carbon dioxide allow, simultaneously with water electrolysis, the production of various products such as synthesis gas, formaldehyde, formic acid, methanol, methane, etc.

In the context of this description, the term "comprising" should be understood as "including, among others." As such, the term should not be interpreted as "consisting only of."

It is to be noted that any value X presented in the course of this description should be interpreted as an approximate value of the actual value X, since such an approximation to the actual value would be reasonably expected by a person skilled in the art due to experimental and/or measurement conditions that introduce deviations from the actual value. Thus, for example, a reference to "80%" means a value of "approximately 80%".

Unless otherwise indicated, the value ranges presented in this description are intended to provide a simplified and technically acceptable way of indicating each individual value within the respective range. For example, the expression "15% to 25%" or "between 15% and 25%" means any value within this range, for example 15%; 16%; 17%; 18%; 19%; 20%; 21%; 22%; 23%; 24%; 25%; or others, for example including a decimal place.

In the context of the present invention, the term "faradaic efficiency" or "faradic efficiency" should be understood as the fraction of the current applied to the cell that is used in the production of the desired product.

Within the scope of the present invention, "overvoltage" is understood to be the difference between the thermodynamic potential equilibrium for a given reduction or oxidation reaction and the potential at which the reaction is observed experimentally.

According to the present invention, "strong acid" is understood to be any acid that ionizes completely in solution, resulting in solutions with a pH less than 3.

In turn, the term "Brønsted acid," when used here, should be understood as a substance that is a proton donor.

In the context of the present invention, a "Brønsted base" is understood to be a substance that is a proton acceptor.

Furthermore, according to the present invention, "protic ionic liquid" is understood to be a liquid that possesses active or exchangeable protons.

Protic ionic liquids are synthesized through neutralization reactions between a Brønsted acid, or proton donor, and a Brønsted base, a proton acceptor. In this type of ionic liquid, the exchangeable protons induce hydrogen bonding, which gives them excellent properties for specific applications. In this sense, the present inventors have found that this type of ionic liquid is particularly suitable for the electrochemical reduction of carbon dioxide. Unlike the synthesis of protic ionic liquids, the synthesis of hydrophilic ionic liquids is more complex and requires more steps, involving an alkylation of the corresponding amine in the presence of a selected bromoalkane, followed by an ion exchange reaction of the bromide anion for the desired anion, as is the case for example with [EMIM] [OTf], making this type of ionic liquid more expensive and with a larger carbon footprint.

The inventors of the present invention, through various studies, have verified that the influence of water on the electrochemical reduction of CO2 is not linear, depending on several parameters, such as conductivity, viscosity, CO₂ solubility, increase in the local concentration of the ionic liquid on the electrode surface, i.e., the formation of certain microenvironments.

They also found that the use of protic ionic liquids consisting of anions of Brønsted bases conjugated to weak Brønsted acids, which are synthesized through neutralization reactions between a Brønsted acid, or proton donor, and a Brønsted base, proton acceptor, in aqueous solutions with significant amounts of water, enables the electro-reduction of CO₂ with high selectivities and current densities, inhibiting the competitive hydrogen formation reaction, representing sustainable electrolytes.

As demonstrated in Example 1 below, when an electro-reduction is carried out with an electrolyte consisting only of a Brønsted acid, only hydrogen is formed through the electro-reduction of water, contrary to what occurs with the electrolytes of the present invention, where the electro-reduction of CO₂ is the main reaction.

The protic ionic liquids that constitute the electrolytes of the present invention are obtained from the neutralization reaction between a Brønsted acid and a Brønsted base so that the electro-reduction of CO₂ is the main reaction (Example 4). However, if the cation is a hydrophilic but not protic cation, the electro-reduction of CO₂ is residual (Example 3).

Thus, the present invention relates to an electrolyte for the electrochemical reduction of carbon dioxide comprising a hydrophilic protic ionic liquid with a weight concentration in the range of 99.5% w/w to 2% w/w and water with a weight concentration in the range of 2% to 98%, wherein the hydrophilic protic ionic liquid comprises an anion that is a Bronsted base conjugate of a Brønsted acid.

In one embodiment of the present invention, Brønsted acids are selected from the group comprising: carboxylic, sulfonic or phosphoric acids.

Carboxylic acids are selected from the group comprising: acetic, propionic, isobutyric, lactic, gallic (monocarboxylic) acids, dicarboxylic acids such as fumaric, maleic, malonic, succinic, octanedioic and tartaric acids, tricarboxylic acids such as citric acid.

Sulfonic acids are selected from the group comprising: ethanesulfonic acids, propanesulfonic acids, butanesulfonic acids and paratoluenesulfonic acids.

In turn, phosphoric acids are selected from the group that includes: monophosphoric, metaphosphoric, phosphorous, and hypophosphoric acids.

In one embodiment of the invention, the Brønsted bases are selected from the group comprising: i) imidazoles, such as such as di-alkylimidazole, mono-substituted imidazole with alkyl groups, such as 1-methylimidazole, 1-ethylimidazole; ii) trisubstituted amines with alkyl or aryl groups; iii) substituted guanidines, such as tetramethylguanidine; iv) pyridine, monosubstituted pyridine with alkyl groups; v) pyrazole, pyrazole substituted with alkyl groups; vi) pyrrole, pyrrole substituted with alkyl groups; vii) triazole; viii) amino acids such as asparagine, alanine, proline, arginine, tryptophan, histidine; ix) trisubstituted phosphines with alkyl or aryl groups; and x) disubstituted sulfonic acids with alkyl or aryl groups.

Furthermore, through various studies conducted by the inventors of the present invention, it was found that ionic liquids formed from conjugate bases of strong acids are outside the scope of the invention, since the main reaction is the reduction of protons to produce hydrogen, the reduction of CO₂ is a secondary reaction, as demonstrated in Example 2.

The electrolytes of the present invention are prepared by adding water to a protic ionic liquid, which comprises an anion that is a Brønsted base conjugate to a Brønsted acid. Water is added in an amount ranging from 0.5% w/w to 98% w/w, with an amount in the range of 50% w/w to 98% w/w being more preferably added. Carbon dioxide is then dissolved into the electrolyte thus obtained by means of processes known in the art, such as bubbling the gas into the solution, or contacting a gaseous stream containing CO₂ with the electrolyte in a suitable facility, such as, for example, a contactor.

The electrolyte of the present invention can be used for the electrochemical reduction of carbon dioxide, saturated in CO₂ or partially saturated in CO₂, with its use in the fully saturated state being preferred.

The electrolytes of the present invention can be used application both in electrochemical reduction and in integrated processes for direct capture and conversion of CO₂ using ionic liquids as constituents of capture media.

Electrochemical reactors in which these protic ionic liquids can be used as electrolyte constituents can be single-compartment, two-compartment, or three-compartment cells, with or without separators or ion-exchange membranes, of the filter press cell or microfluidic cell type.

The present invention also relates to a process for the electrochemical reduction of carbon dioxide comprising the following steps:
- Addition of 0.5% w/w to 98% w/w of demineralized water to the hydrophilic protic ionic liquid, obtaining the electrolyte of the present invention;
- Dissolution of the electrolyte obtained in the previous step of CO₂ at the desired pressure, which can range from ambient pressure to 80 bar, preferably in the range between atmospheric pressure and 30 bar;
- Stabilization of the desired pressure and temperature for electrolysis;
- Electrolysis at a temperature in the range of ambient temperature to 80°C and at a pressure in the range of atmospheric pressure to 80 bar, applying a current that make the operation of an industrial CO₂ electrolyzer more profitable, typically exceeding 100 mA/cm², down to the order of Amperes per cm².

Thus, the present invention relates to a new electrolyte and a process for the electrochemical reduction of carbon dioxide which offer the following advantages over the prior art:
- It uses water as a solvent, which is an excellent sustainable solvent and, therefore, the use of aqueous solutions of ionic liquids has a high potential for sustainability;
- It uses ionic liquids that are considered "green solvents" due to their negligible volatility, flammability, and high chemical and thermal stability; and
- The use of a greater quantity of water in the composition of ionic liquid-based electrolytes has the great advantage of making them cheaper and consequently more suitable for industrial use.

The invention is described in more detail through examples which should not be understood as limiting the scope of the invention in any way.

### EXAMPLES

### Example 1 - Preparation of an electrolyte comprising only a Bronsted acid and electro-reduction of CO₂ with the prepared electrolyte.

An electrolyte was prepared consisting of lactic acid and 50% demineralized water, resulting in an electrolyte with a molar concentration of lactic acid of 6.08 mol/L. A commercial zinc foil was used as the cathode and as anode a sacrificial zinc electrode. The quasi-reference electrode used was a silver rod. A single-compartment high-pressure electrochemical cell was used. The electrolyses were galvanostatically controlled. The electrolyte was saturated with 10 bar of CO₂ from Air Liquide. After stabilizing the pressure and temperature, the electrolysis was carried out at a temperature of 45°C and 10 bar of CO₂, applying a current of 4.14 mA/cm². After electrolysis, the resulting gas was analyzed by gas chromatography. Only hydrogen production was detected, and no CO₂ electro-reduction was observed.

### Example 2 - Preparation of an electrolyte comprising a protic ionic liquid, formed from the conjugate base of a strong acid, and electro-reduction of CO₂ with the prepared electrolyte.

An electrolyte was prepared by adding demineralized water to the protic ionic liquid 1-methylimidazoline methanesulfonate [HMIM][CH₃SO₃], where the anion is the conjugate base of the strong acid methanesulfonic acid, resulting in an electrolyte with a water concentration of 50% by weight. A commercial zinc foil was used as the cathode, and a sacrificial zinc electrode was used as the anode. A silver rod was used as the quasi-reference electrode. A single-compartment high-pressure electrochemical cell was used. The electrolyses were galvanostatically controlled. The electrolyte was saturated with 10 bar of CO₂ from Air Liquide. After pressure and temperature stabilization, the electrolysis was carried out at a temperature of 45°C and 10 bar of CO2, applying a current of 4.24 mA/cm². After electrolysis, the resulting gas was analyzed by gas chromatography. A faradaic efficiency of approximately 2% was obtained for CO₂ and approximately 98% for hydrogen.

### Example 3 - Preparation of the electrolyte comprising the non-protic ionic liquid 1-methylimidazoline acetate [EMIM] [Ac] and CO₂ electro-reduction with the prepared electrolyte.

An electrolyte was prepared by adding demineralized water to the hydrophilic, non-protic ionic liquid, 1-methylimidazoline acetate [EMIM] [Ac], where the anion is the conjugate base of the weak acid, acetic acid, resulting in an electrolyte with a water concentration of 10% by weight. A commercial zinc sheet was used as the cathode, and a sacrificial zinc electrode was used as the anode. A silver rod was used as the quasi-reference electrode. A single-compartment high-pressure electrochemical cell was used. The electrolyses were galvanostatically controlled. The electrolyte was saturated with 10 bar of CO₂ from Air Liquide. After pressure and temperature stabilization, the electrolysis was carried out at a temperature of 45°C and 10 bar of CO₂, applying a current of 4.14 mA/cm². After electrolysis, the resulting gas was analyzed by gas chromatography. A faradaic efficiency of approximately 27% was obtained for CO₂ and approximately 83% for hydrogen.

### Example 4 - Preparation of the electrolyte comprising the protic ionic liquid 1-methylimidazoline acetate [HMIM] [Ac] and CO₂ electro-reduction with the prepared electrolyte.

An electrolyte was prepared by adding demineralized water to the protic ionic liquid 1-methylimidazoline acetate [HMIM][Ac], where the anion is the conjugate base of the weak acid, acetic acid, resulting in an electrolyte with a water concentration of 10% by weight. A commercial zinc sheet was used, and a sacrificial zinc electrode was used as the anode. A silver rod was used as the quasi-reference electrode. A single-compartment high-pressure electrochemical cell was used. The electrolyses were galvanostatically controlled. The electrolyte was saturated with 10 bar of CO₂ from Air Liquide. After pressure and temperature stabilization, the electrolysis was carried out at a temperature of 45°C and 10 bar of CO₂, applying a current of 3.3 mA/cm². After electrolysis, the resulting gas was analyzed by gas chromatography. A faradaic efficiency of approximately 59% was obtained for CO₂ and approximately 41% for hydrogen.

### Example 5 - Preparation of the electrolyte comprising the protic ionic liquid 1-methylimidazoline lactate [HMIM] [Lac] and CO₂ electro-reduction with the prepared electrolyte.

An electrolyte was prepared by adding demineralized water to the protic ionic liquid 1-methylimidazoline lactate [HMIM][Lac], resulting in an electrolyte with a water concentration of 50% by weight. A commercial zinc foil was used as the cathode, and a sacrificial zinc electrode was used as the anode. A silver rod was used as the quasi-reference electrode. A single-compartment high-pressure electrochemical cell was used. The electrolyses were galvanostatically controlled. The electrolyte was saturated with 10 bar of CO₂ from Air Liquide. After pressure and temperature stabilization, the electrolysis was carried out at a temperature of 45°C and 10 bar of CO₂, applying a current of 4.76 mA/cm². After electrolysis, the resulting gas was analyzed by gas chromatography. A faradaic efficiency of 100% was obtained for CO.

It should be noted that although the present invention has been described with reference to its preferred embodiments, many modifications and alternatives may be realized by a person skilled in the art without departing from the scope of the invention, which is defined by the claims.

## Claims

1. An electrolyte for the electrochemical reduction of carbon dioxide, **characterized by** comprising a hydrophilic protic ionic liquid with a weight concentration in the range of 99.5% w/w to 2% w/w and water with a weight concentration in the range of 0.5% w/w to 98% w/w, wherein the hydrophilic protic ionic liquid comprises an anion that is a Brønsted base conjugate of a Brønsted acid.

2. The electrolyte, according to claim 1, **characterized in that** the Brønsted base is selected from the group comprising: imidazoles; trisubstituted amines with alkyl or aryl groups; substituted guanidines; pyridine or monosubstituted pyridine with alkyl groups; pyrazole or pyrazole substituted with alkyl groups; pyrrole or pyrrole substituted with alkyl groups; triazole; amino acids; trisubstituted phosphines with alkyl or aryl groups; and disubstituted sulfonic acids with alkyl or aryl groups.

3. The electrolyte, according to claim 1, **characterized in that** the Brønsted acid is selected from the group comprising carboxylic, sulfonic or phosphoric acids.

4. The electrolyte, according to claims 1 and 3, **characterized in that** the carboxylic acid is preferably selected from the group comprising: acetic acid, propionic acid, isobutyric acid, acid, lactic acid, gallic acid, dicarboxylic acids, and tricarboxylic acids.

5. The electrolyte, according to claims 1 and 3, **characterized in that** the sulfonic acid is preferably selected from the group comprising: ethanesulfonic acid, propanesulfonic acid, butanesulfonic acid and paratoluenesulfonic acid.

6. The electrolyte, according to claims 1 and 3, **characterized in that** the phosphoric acid is selected from the group comprising: monophosphoric acid, metaphosphoric acid, phosphorous acid and hypophosphoric acid.

7. The electrolyte, according to claim 1, **characterized in that** the weight concentration of water is in the range of 50% w/w to 98% w/w.

8. A process for the electrochemical reduction of carbon dioxide **characterized by** comprising the following steps:
- addition of 0.5% w/w to 98% w/w of demineralized water to the hydrophilic protic ionic liquid to obtain the electrolyte, as described in claims 1 to 7;
- dissolution of the electrolyte obtained in the previous step with CO₂ pressure in the range of ambient pressure to 80 bar;
- stabilization of the desired pressure and temperature for electrolysis;
- electrolysis at a temperature in the range of ambient temperature to 80°C and at a pressure in the range of atmospheric pressure to 80 bar of CO₂, applying a current greater than 100 mA/cm² up to the order of magnitude of Ampere per cm².

9. The process according to claim 8, **characterized by** the addition of demineralized water in an amount ranging from 50% w/w to 98% w/w.

10. The process according to claim 8, **characterized in that** the dissolution of the electrolyte is carried out at a CO₂ pressure in the range between atmospheric pressure and 30 bar.

11. The use of the electrolyte, as defined in claims 1 to 7, is **characterized by** being used in the electrochemical reduction of carbon dioxide or in the direct capture and conversion of carbon dioxide.
